# EUROPEAN PATENT APPLICATION

(11) **EP 4 332 670 A1**
(43) Date of publication of application: **06.03.2024**
(21) Application number: 22215679.6
(22) Date of filing: 21.12.2022
(51) Int. Cl.: G02F 1/13357

(54) **LIGHT-GUIDING PLATE ASSEMBLY, BACKLIGHT MODULE AND DISPLAY DEVICE**

(30) Priority: 31.08.2022 CN 202211056637
(71) Applicant: Shanghai Tianma Microelectronics Co., Ltd., Shanghai 201201 (CN)
(72) Inventor: CHANG, Binbin, Shanghai, 201201 (CN); GUO, Zhanxiang, Shanghai, 201201 (CN); XU, Yumin, Shanghai, 201201 (CN); GAO, Zhaoxing, Shanghai, 201201 (CN); WANG, Wanzhen, Shanghai, 201201 (CN); SUN, Weiyang, Shanghai, 201201 (CN)
(74) Representative: Prinz & Partner mbB

(57) **Abstract**

Provided are a light-guiding plate assembly, a backlight module and a display device, relating to the field of display technologies to improve the light-emitting uniformity and alleviate the crosstalk of the backlight module. The light-guiding plate assembly includes a reflective portion and a transmissive portion. The transmissive portion includes a first sub-transmissive-portion and a second sub-transmissive-portion. In the direction perpendicular to the plane where the light-guiding plate assembly is located, the first sub-transmissive-portion does not overlap the reflective portion, and the second sub-transmissive-portion is located on a side of the reflective portion facing a light-exiting side of the light-guiding plate assembly.

## Description

### TECHNICAL FIELD

The present disclosure relates to the field of display technologies and, in particular, a light-guiding plate assembly, a backlight module, and a display device.

### BACKGROUND

With development in the display technologies, a plane display device such as a liquid crystal display (LCD) panel is widely applied to various electronic products such as a mobile phone, a television, a digital camera, and a laptop, and becomes the mainstream of display devices due to the advantages of high quality, power saving, and wide application range.

Since the LCD panel itself does not emit light, the LCD panel needs to be used in cooperation with a backlight module. The existing backlight module has problems of uneven light brightness and optical crosstalk.

### SUMMARY

In view of this, embodiments of the present disclosure provide a light-guiding plate assembly, a backlight module, and a display device to improve the light-emitting uniformity of the backlight module, and to alleviate the optical crosstalk of the backlight module.

Embodiments of the present disclosure provide a light-guiding plate assembly. The light-guiding plate assembly includes a reflective portion and a transmissive portion. The transmissive portion includes a first sub-transmissive-portion and a second sub-transmissive-portion. In a direction perpendicular to a plane where the light-guiding plate assembly is located, the first sub-transmissive-portion does not overlap the reflective portion. The second sub-transmissive-portion is located on a side of the reflective portion facing a light-exiting side of the light-guiding plate assembly.

Embodiments of the present disclosure provide a backlight module. The backlight module includes a backlight and the preceding light-guiding plate assembly. The light-guiding plate assembly is located on a light-exiting side of the backlight.

Embodiments of the present disclosure provide a display device. The display device includes an imaging component and the preceding backlight module.

### BRIEF DESCRIPTION OF DRAWINGS

To illustrate solutions in embodiments of the present disclosure more clearly, the drawings used in description of the embodiments will be briefly described below.
FIG. 1 is a perspective view of a light-guiding plate assembly according to embodiments of the present disclosure.
FIG. 2 is a sectional view of the light-guiding plate assembly of FIG. 1 taken along AA'.
FIG. 3 is a sectional view of a backlight module according to embodiments of the present disclosure.
FIG. 4 is a perspective view of a reflective portion in a light-guiding plate assembly according to embodiments of the present disclosure.
FIG. 5 is a top view of a reflective portion in a light-guiding plate assembly according to embodiments of the present disclosure.
FIG. 6 is another perspective view of a light-guiding plate assembly according to embodiments of the present disclosure.
FIG. 7 is a perspective view of a transmissive portion corresponding to multiple light-guiding plate units according to embodiments of the present disclosure.
FIG. 8 is a perspective view of a transmissive portion corresponding to a single light-guiding plate unit according to embodiments of the present disclosure.
FIG. 9 is a top view of a transmissive portion in a light-guiding plate assembly according to embodiments of the present disclosure.
FIG. 10 is another perspective view of a transmissive portion according to embodiments of the present disclosure.
FIG. 11 is sectional view of another light-guiding plate assembly according to embodiments of the present disclosure.
FIG. 12 is a view of paths of light passing through a recessed structure provided with a microstructure.
FIG. 13 is another sectional view of a light-guiding plate assembly according to embodiments of the present disclosure.
FIG. 14 is another sectional view of a light-guiding plate assembly according to embodiments of the present disclosure.
FIG. 15 is a laminating view of a backlight module according to embodiments of the present disclosure.
FIG. 16 is a sectional diagram of a display device according to embodiments of the present disclosure.
FIG. 17 is a top view of a display device according to embodiments of the present disclosure.

### DETAILED DESCRIPTION

In order to better understand the solutions of the present disclosure, embodiments of the present disclosure will be detailed below in conjunction with the drawings.

Terms used in the embodiments of the present disclosure are merely used to describe the specific embodiments and not intended to limit the present disclosure. As used in the embodiments of the present disclosure and the appended claims, the singular forms, including "a", "the" and "this", are intended to include the plural forms as well, unless the context clearly indicates otherwise.

It should be understood that the term "and/or" in the embodiments of the present disclosure describes the association relationships of associated objects and indicates that three relationships may exist. For example, A and/or B may indicate three conditions of A alone, both A and B, and B alone. In addition, the character "/" of the embodiments of the present disclosure generally indicates that the front and rear associated objects are in an "or" relationship.

It should be understood that although the terms first and second may be used in the embodiments of the present disclosure to describe sub-transmissive-portions, these sub-transmissive-portions should not be limited to these terms. These terms are only used for distinguishing the sub-transmissive-portions. For example, without departing from the scope of the present disclosure, a first sub-transmissive-portion may be referred to as a second sub-transmissive-portion. Similarly, the second sub-transmissive-portion may be referred to as the first sub-transmissive-portion.

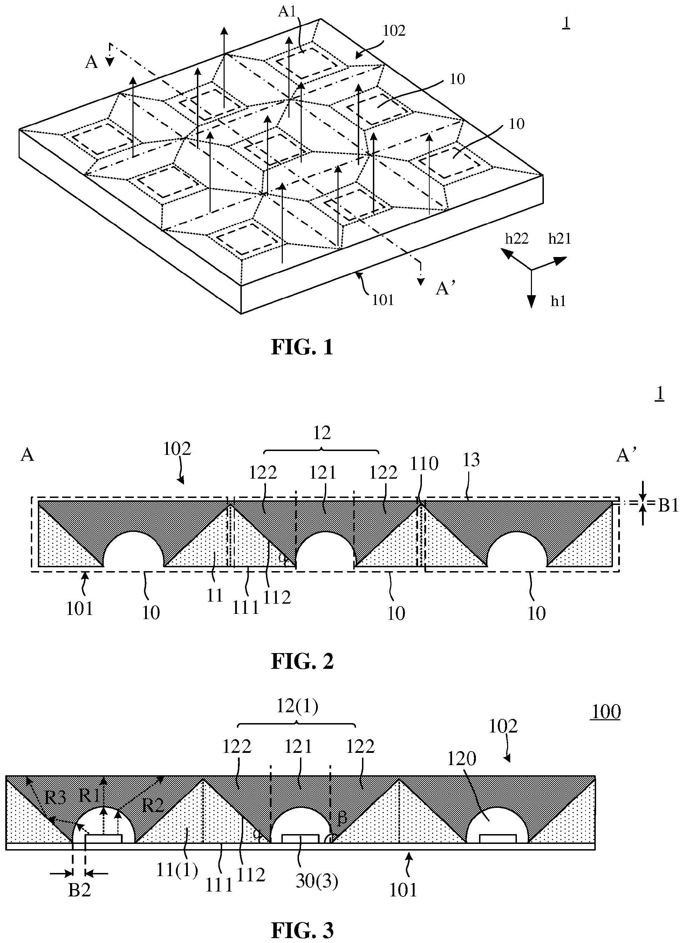

Embodiments of the present disclosure provide a light-guiding plate assembly. As shown in FIG. 1, FIG. 1 is a perspective view of a light-guiding plate assembly 1 according to embodiments of the present disclosure. A light-incidence side 101 of the light-guiding plate assembly 1 and a light-exiting side 102 of the light-guiding plate assembly 1 are disposed in the thickness direction h1 of the light-guiding plate assembly 1. Arrows passing through the light-guiding plate assembly 1 in FIG. 1 illustrate the propagation direction of light passing through the light-guiding plate assembly 1.

When the light-guiding plate assembly 1 and a backlight are fitted to form a backlight module, the backlight may be disposed facing the light-incidence side 101 of the light-guiding plate assembly 1. The light-guiding plate assembly 1 can guide the light emitted from the backlight to make the light emitted from the backlight enter from the light-incidence side 101 of the light-guiding plate assembly 1 and exit from the light-exiting side 102 of the light-guiding plate assembly 1.

Referring to FIGS.1 and 2, FIG. 2 is a sectional view of the light-guiding plate assembly of FIG. 1 taken along AA'. The light-guiding plate assembly 1 includes multiple light-guiding plate units 10 arranged in an array in a direction parallel to the plane where the light-guiding plate assembly 1 is located. As shown in FIG. 1, a plane where intersection of the first direction h21 and the second direction h22 is located defines the plane where the light-guiding plate assembly 1 is located.

As shown in FIGS. 1 and 2, a light-guiding plate unit 10 includes a light-emitting element disposing region A1. The light-emitting element disposing region A1 is used to dispose a light-emitting element.

As shown in FIG. 2, the light-guiding plate unit 10 also includes a reflective portion 11 and a transmissive portion 12. The reflective portion 11 is used to reflect the light emitted from the light-emitting element. The transmissive portion 12 is used to transmit the light emitted from the light-emitting element. The reflectance of the reflective portion 11 is higher than the reflectance of the transmissive portion 12. The transmittance of the transmissive portion 12 is higher than the transmittance of the reflective portion 11. The reflective portion 11 is used to reflect the light. The transmissive portion 12 is used to transmit the light.

In the embodiments of the present disclosure, as shown in FIG. 2, the transmissive portion 12 includes a first sub-transmissive-portion 121 and a second sub-transmissive-portion 122. In the direction perpendicular to the plane where the light-guiding plate assembly 1 is located, the first sub-transmissive-portion 121 does not overlap the reflective portion 11, and the second sub-transmissive-portion 122 is located on a side of the reflective portion 11 facing the light-exiting side 102 of the light-guiding plate assembly 1. In an example, the first sub-transmissive-portion 121 is disposed corresponding to the preceding light-emitting element disposing region A1. That is, when the light-guiding plate assembly 1 and the backlight are fitted to form the backlight module, as shown in FIG. 3, which is a sectional view of a backlight module 100 according to embodiments of the present disclosure, the light-emitting element 30 in the backlight may be disposed corresponding to the light-guiding plate unit 10 in the embodiments of the present disclosure. In some embodiments, the light-emitting element 30 may be disposed corresponding to the first sub-transmissive-portion 121 in the light-guiding plate unit 10.

After the light-guiding plate assembly 1 and light-emitting elements 30 are assembled to form the backlight module 100, when the backlight module 100 works, for small-angle light emitted from the light-emitting element 30, such as the small-angle light R1 and the small-angle light R2 shown in FIG. 3, can exit from the light-guiding plate assembly 1 after the small-angle light R1 and the small-angle light R2 are emitted into the light-guiding plate assembly 1 through the first sub-transmissive-portion 121. Herein, the small-angle light refers to light emitted from the light-emitting element 30 and having small included angles with respect to the thickness direction of the light-guiding plate assembly 1. For large-angle light emitted from the light-emitting element 30, such as the large-angle light R3 shown in FIG. 3, can be reflected by the reflective portion 11 to propagate in a direction facing the light-exiting side of the light-guiding plate assembly 1. Herein, the large-angle light refers to light emitted from the light-emitting element 30 and having large included angles with respect to the thickness direction of the light-guiding plate assembly 1. With this arrangement, the large-angle light R3 is prevented from irradiating to the region where other light-emitting elements 30 are located, avoiding mutual crosstalk of the light emitted from different light-emitting elements 30. Moreover, such an arrangement can improve the intensity of light emitted from the region where the reflective portion 11 is located in the light-guiding plate assembly 1, balance the intensity of light emitted from the region where the first sub-transmissive-portion 121 is located and the intensity of light emitted from the region where the second sub-transmissive-portion 122 is located, facilitating improving the uniformity of the intensity of light emitted from different regions in the light-guiding plate assembly 1. In addition, such an arrangement can also improve the utilization rate of the large-angle light emitted from the light-emitting element 30, facilitating improving the brightness of the backlight module 100 including the light-guiding plate assembly 1 and reducing the power consumption of the backlight module 100.

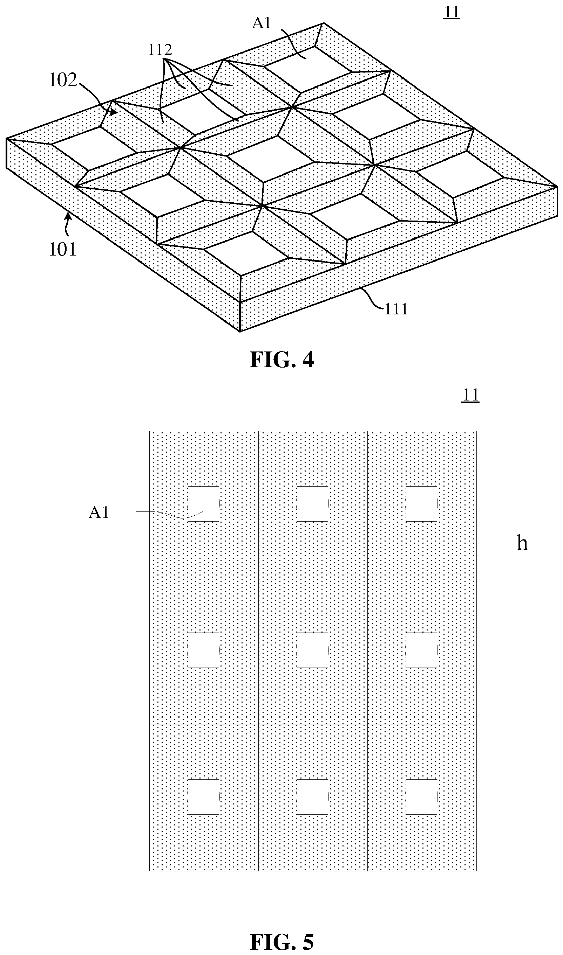

In an example, as shown in FIGS. 2, 3 and 4, FIG. 4 is a perspective view of a reflective portion 11 in a light-guiding plate assembly 1 according to embodiments of the present disclosure. The reflective portion 11 includes a bottom surface 111 facing the light-incidence side 101 of the light-guiding plate assembly 1 and a side surface 112 facing the second sub-transmissive-portion (not shown in FIG. 4). The included angle α (not shown in FIG. 4) is provided between the side surface 112 and the bottom surface 111. In the embodiments of the present disclosure, 0° < α < 90°. The side surface 112 of the reflective portion 11 may be served as a reflective surface. In the embodiments of the present disclosure, by setting 0° < α < 90°, when the light-guiding plate assembly 1 and the light-emitting element 30 are fitted, as shown in FIG. 3, in the direction parallel to the plane where the light-guiding plate assembly 1 is located, the light-emitting element 30 may be disposed on a side of the side surface 112 facing away from the bottom surface 111. As shown in FIG. 4, the light-emitting element disposing region A1 is disposed to be located on a side of the side surface 112 of the reflective portion 11 facing away from the bottom surface 111. In this way, when the light-emitting element 30 emits the light, more large-angle light emitted from the light-emitting element 30 can be received by the side surface 112 of the reflective portion 11, and the reflected light can be emitted from the light-guiding plate assembly 1 through the first sub-transmissive-portion (not shown in FIG. 4), avoiding the mutual crosstalk between the large-angle light and the light emitted from other light emitting elements 30, as well as fully utilizing the large-angle light emitted from the light-emitting element 30, improving the brightness of the backlight module 100 including the light-guiding plate assembly 1, and reducing the power consumption of the backlight module 100.

As shown in FIG. 3, in the embodiments of the present disclosure, the reflective portion 11 in a single light-guiding plate unit 10 may be disposed around the light-emitting element 30 so that the reflective portion 11 reflects more large-angle light emitted from the light-emitting element 30 in various directions to improve the brightness of the backlight module 100 including the light-guiding plate unit 1.

As shown in FIGS. 2, 3, 4 and 5, FIG. 5 is a top view of a reflective portion 11 in a light-guiding plate assembly according to embodiments of the present disclosure. In the embodiments of the present disclosure, the reflective portion 11 may be provided with a structure similar to a reflective bowl. In the embodiments of the present disclosure, at least part of the bottom portion of the reflective bowl is removed to make room for disposing the light-emitting element 30. That is, as shown in FIG. 3, when the light-guiding plate assembly 1 and the light-emitting element 30 are assembled, the light-emitting element 30 is disposed in a way that the light-emitting element 30 does not overlap the reflective portion 11.

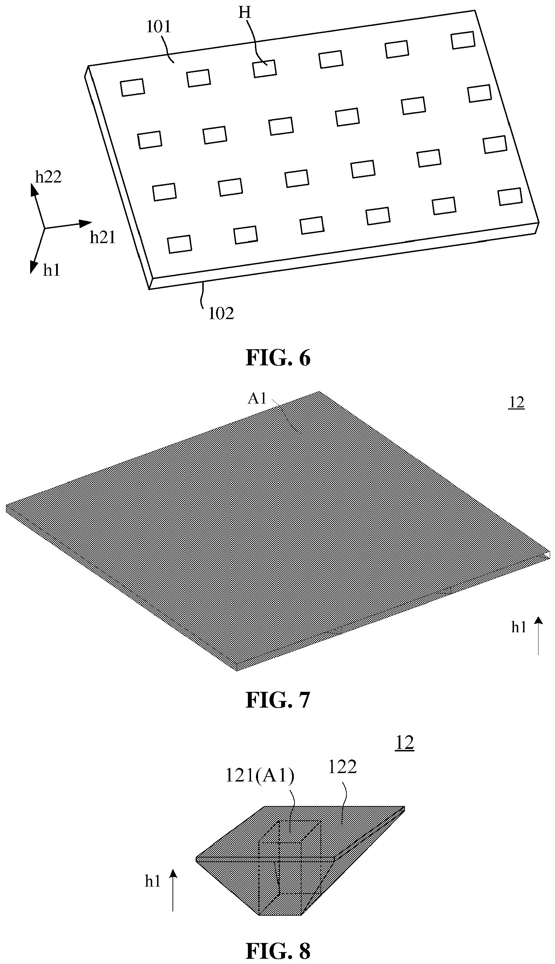

In an example, as shown in FIG. 6, FIG. 6 is another perspective view of a light-guiding plate assembly according to embodiments of the present disclosure. A light-incidence side 101 of a light-guiding plate assembly 1 is provided with an opening H disposed corresponding to a first sub-transmissive-portion (not shown in FIG. 6). A light-emitting element (not shown in FIG. 6) may be disposed in the opening H.

As shown in FIG. 3, when the light-guiding plate assembly 1 and the light-emitting element 30 are fitted, in the embodiments of the present disclosure, the bottom surface of the light-emitting element 30 and the bottom surface 111 of the reflective portion 11 may be disposed on the same plane. In the direction parallel to the plane where the light-guiding plate assembly 1 is located, the reflective portion 11 at least partially overlaps the light-emitting element 30. Such an arrangement is equivalent to at least partially embedding the light-emitting element 30 in the light-guiding plate assembly 1, facilitating reducing the thickness of the backlight module 100 including the light-emitting element 30 and the light-guiding plate assembly 1.

In an example, in the light-guiding plate assembly 1, as shown in FIGS. 2 and 3, the second sub-transmissive-portion 122 and the reflective portion 11 are attached to each other at the position where the side surface 112 of the reflective portion 11 is located.

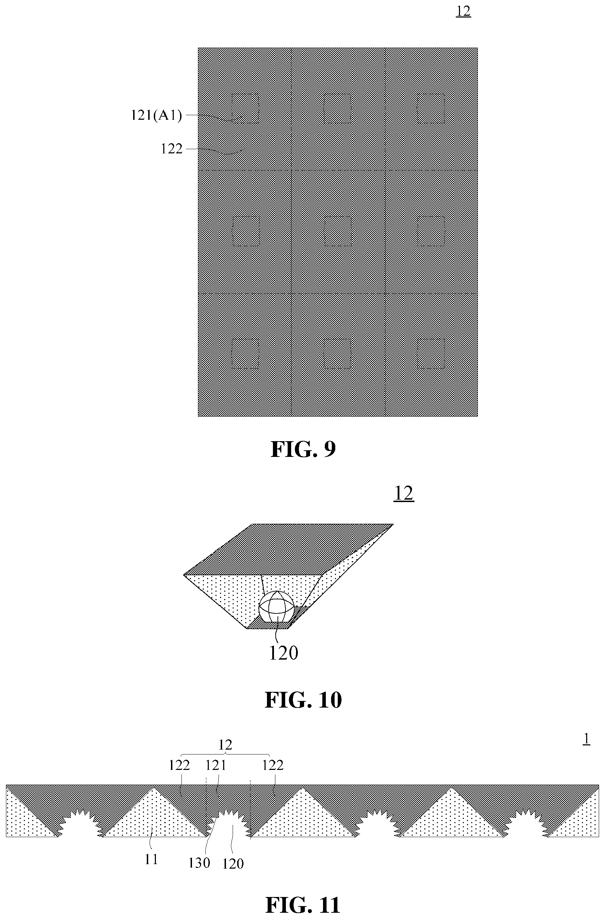

In the embodiments of the present disclosure, the transmissive portion 12 located in a light-guiding plate unit 10 may be provided as a frustum structure similar to a cone frustum or a pyramid frustum. For example, when the side surface 112 of the reflective portion 11 is a plane, the side surface of the transmissive portion 12 is also provided as a plane. That is, the transmissive portion 12 is designed as a pyramid frustum structure. When the side surface 112 of the reflective portion 11 is an arc surface, the side surface of the transmissive portion 12 is also provided as an arc surface. That is, the transmissive portion 12 is designed as a cone frustum. In an example, as shown in FIGS. 7, 8 and 9, FIG. 7 is a perspective view of a transmissive portion corresponding to multiple light-guiding plate units 10 according to embodiments of the present disclosure, FIG. 8 is a perspective view of a transmissive portion corresponding to a single light-guiding plate unit 10 according to embodiments of the present disclosure, and FIG. 9 is a top view of an orthographic projection of a transmissive portion on a plane where a light-guiding plate assembly is located. The second sub-transmissive-portion 122 surrounds the first sub-transmissive-portion 121. In an example, the first sub-transmissive-portion 121 and the second sub-transmissive-portion 122 may be integrally molded. The first sub-transmissive-portion 121 and the second sub-transmissive-portion 122 do not include any boundary therebetween.

As shown in FIG. 2, FIG. 3 and FIG. 10, FIG. 10 is another perspective view of a transmissive portion according to embodiments of the present disclosure. The transmissive portion 12 is provided with a recessed structure 120 that recesses toward the light-exiting side 102 of the light-guiding plate assembly 1.

As shown in FIG. 3, the light-emitting element 30 is disposed corresponding to the recessed structure 120. The recessed structure 120 is provided to make the surface of the transmissive portion 12 facing the light-emitting element 30 form a lens structure. In this manner, the light emitted from the light-emitting element 30 can be diffused by the recessed structure 120 when passing through the recessed structure 120, facilitating improving the uniformity of the light emitted from the light-guiding plate assembly 1 at each position.

In some embodiments, as shown in FIG. 3, a clearance is provided between the surface of the recessed structure 120 and the light-emitting element 30. Such an arrangement facilitates the heat dissipation of the light-emitting element 30.

As shown in FIG. 3, in the embodiments of the present disclosure, the surface of the recessed structure 120 facing the light-incidence side 101 of the light-guiding plate assembly 1 and the bottom surface of the reflective portion 11 may be provided on the same plane. In this manner, when the light-guiding plate assembly 1 and the light-emitting element 30 are fitted, the surface of the recessed structure 120 facing the light-guiding plate assembly 1 and the bottom surface of the light-emitting element 30 can be provided the same plane, the large-angle light emitted from the light-emitting element 30 can first pass through the recessed structure 120 to be diffused and then irradiate the side surface 112 of the reflective portion 11, facilitating improving the uniformity of the large-angle light incident on the side surface 112 of the reflective portion 11.

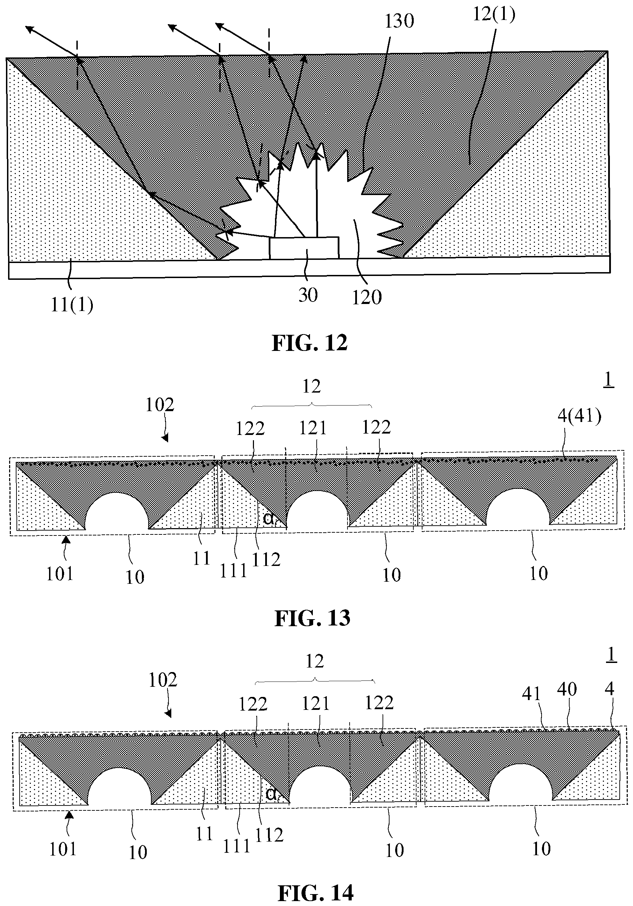

In an example, as shown in FIG. 11, FIG. 11 is schematic view of another light-guiding plate assembly 1 according to embodiments of the present disclosure. The surface of a recessed structure 120 is provided with a microstructure 130. Referring to FIG. 12, FIG. 12 is a view of paths of light passing through the recessed structure 120 provided with the microstructure 130. The microstructure 130 is provided to further diffuse light emitted from a light-emitting element 30, so as to make the light emitted from the light-guiding plate assembly 1 be more uniform. In an example, as shown in FIGS. 10 and 11, the microstructure 130 may be in a shape of sawtooth. The shape of sawtooth may be V-shaped.

In an example, as shown in FIG. 2, the reflective portion 11 includes an end portion 110 facing the light-exiting side 102 of the light-guiding plate assembly 1. The transmissive portion 12 includes a first surface 13 facing the light-exiting side of the light-guiding plate assembly 1. The distance BI between the first surface 13 and the end portion 110 is greater than or equal to 0.3 mm. Such an arrangement can reduce the light condensing effect at the end portion 110 of the reflective portion 11 and improve the uniformity of the light emitted from the light-guiding plate assembly 1. In addition, such an arrangement can make the transmissive portions 12 disposed corresponding to different light-guiding plate units 10 be connected to each other, that is, make multiple transmissive portions 12 disposed corresponding to the different light-emitting elements 30 together form a plate-like structure as shown in FIG. 7, facilitating an integral formation of the transmissive portions 12 disposed corresponding to the different light-emitting elements 30, and facilitating the production and assembly of the backlight module including the light-guiding plate assembly 1.

In an example, as shown in FIG. 13, FIG. 13 is another sectional view of a light-guiding plate assembly according to embodiments of the present disclosure. A light-guiding plate assembly 1 also includes a diffusion portion 4 located on a side of a transmissive portion 12 facing a light-exiting side 102 of the light-guiding plate assembly 1. The diffusion portion 4 is provided to diffuse light emitted from a light-emitting element 30, so as to make the light emitted from the light-guiding plate assembly 1 more uniform.

In an example, as shown in FIG. 13, at least part of the diffusion portion 4 is located on a side of a reflective portion 11 facing the light-exiting side 102 of the light-guiding plate assembly 1. Such an arrangement can make the light reflected by the reflective portion 11 emit after being diffused by the diffusion portion 4, improving the uniformity of the light emitted from the light-guiding plate assembly 1.

As shown in FIG. 14, FIG. 14 is another sectional view of a light-guiding plate assembly according to embodiments of the present disclosure. A diffusion portion 4 includes a protruding structure 40 that protrudes from the transmissive portion 12 toward the light-exiting side 102 of the light-guiding plate assembly 1. The protruding structure 40 is provided to diffuse light propagating therethrough, so as to make light emitted from different positions of the light-guiding plate assembly 1 more uniform. In an example, the protruding structure 40 includes dot-shaped protrusions and/or V-shaped protrusions. In the embodiments of the present disclosure, the diffusion portion 4 may be directly molded by preparing the V-shaped protrusions or the dot-shaped protrusions on the surface of the transmissive portion 12 through a molding die.

In an example, as shown in FIGS. 13 and 14, the diffusion portion 4 includes diffusion particles 41. The diffusion particles 41 are disposed on a side of the transmissive portion 12 facing the light-exiting side 102 of the light-guiding plate assembly 1. Such an arrangement saves the need for additionally disposing a diffusion sheet in the light-guiding plate assembly 1, facilitating reducing the number of films in the light-guiding plate assembly 1, reducing the costs, and reducing the thickness of the light-guiding plate assembly 1. Moreover, due to that the number of films in the light-guiding plate assembly 1 is reduced, the relative friction among the films during the verification process of reliability can be correspondingly avoided, facilitating improving the reliability of the light-guiding plate assembly 1. When the light-guiding plate assembly 1 is applied in the display device, during the verification process of the reliability of the display device, the problem of abnormal display of the display device caused by the relative movement between different film structures can be avoided.

In the embodiments of the present disclosure, the diffusion portion 4 and the transmissive portion 12 may be integrally molded to simplify the molding process of the light-guiding plate assembly 1. In an example, the diffusion portion 4 may be prepared by a module insert injection molding process. In the preparation of the transmissive portion 12 of the light-guiding plate assembly 1, the diffusion sheet, the diffusion plate or the diffusion particles, each of which have a diffusion function, may be first placed in the transmissive portion 12, and then be molded through an in-mold injection process, so that the diffusion portion 4 is uniformly distributed in the transmission portion 12.

In an example, the reflective portion 11 and the transmissive portion 12 may be separately prepared and then bonded by a colloid to improve the bonding firmness.

In other embodiments, the reflective portion 11 and the transmissive portion 12 in the embodiments of the present disclosure may be integrally molded to simplify the molding process of the light-guiding plate assembly 1 and improve the bonding firmness of the reflective portion 11 and the transmissive portion 12. Moreover, in such an arrangement, a sealant for securing the reflective portion 11 and the transmissive portion 12 does not need to be provided, so that the bezel of the backlight module may be narrower when the light-guiding plate assembly 1 is applied to the backlight module. In an example, the reflective portion 11 and the transmissive portion 12 may be integrally molded through the injection molding process.

In an example, the reflective portion 11 includes a white material to improve the reflectance of the reflective portion 11. In an example, the reflective portion 11 includes polymethyl methacrylate (PMMA) or polycarbonate (PC).

In an example, the transmissive portion 12 includes a transparent material, to ensure that the transmissive portion 12 has a higher transmissivity, and to ensure the light transmission effect of the transmissive portion 12.

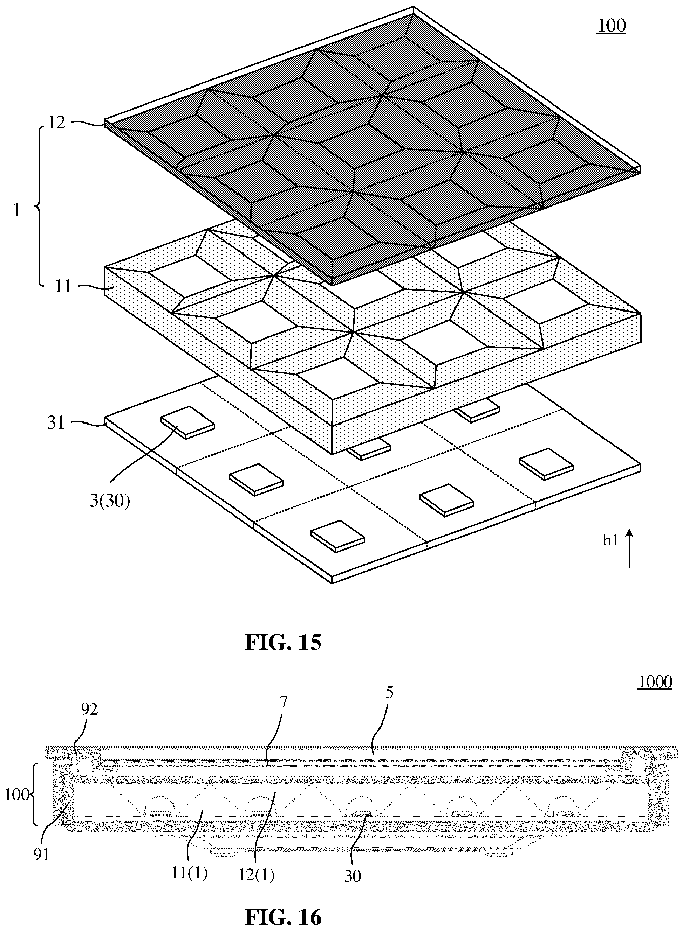

The embodiments of the present disclosure also provide a backlight module 100. Referring to FIGS. 3 and 15, FIG. 15 is a laminating view of a backlight module 100 according to embodiments of the present disclosure. The backlight module 100 includes backlights 3 and the preceding light-guiding plate assembly 1. The light-guiding plate assembly 1 is located on a light-exiting side of a backlight 3.

When the backlight module 100 works, the backlight 3 emits light. The light emitted from the backlight 3 is guided by the light-guiding plate assembly 1 and emitted to a display panel (not shown) located on the light-exiting side of the light-guiding assembly 1.

In the backlight module 100 provided by the embodiments of the present disclosure, the light-guiding plate assembly 1 is provided with the transmissive portion 12 and the reflective portion 11, and the transmissive portion 12 is provided with the first sub-transmissive-portion 121 and the second sub-transmissive-portion 122. In the direction h1 perpendicular to the plane where the light-guiding plate assembly 1 is located, the first sub-transmissive-portion 121 does not overlap the reflective portion 11. The second sub-transmissive-portion 122 is located on a side of the reflective portion 11 facing the light-exiting side of the light-guiding plate assembly 1. In such arrangement, small-angle light emitted from the backlight 3 can be emitted through the first sub-transmissive-portion 121, and large-angle light emitted from the backlight 3 can be reflected by the reflective portion 11, so that the reflected light can be emitted through the second sub-transmissive-portion 122, avoiding the large-angle light from irradiating other positions, avoiding mutual crosstalk of the light emitted from the backlights 3 located in different areas. Moreover, such an arrangement can improve the intensity of light emitted from the region where the reflective portion 11 is located in the light-guiding plate assembly 1, balance the intensity of light emitted from the region where the first sub-transmissive-portion 121 is located and the intensity of light emitted from the region where the second sub-transmissive-portion 122 is located, facilitating improving the uniformity of the intensity of light emitted from different regions in the light-guiding plate assembly 1. In addition, such an arrangement can improve the utilization rate of the large-angle light emitted from the backlight 3, facilitating improving the brightness of the backlight module 100 and reducing the power consumption of the backlight module 100.

In an example, as shown in FIGS. 3 and 15, the backlights 3 include multiple light-emitting elements 30. The multiple light-emitting elements 30 are arranged in an array on the plane where the backlight module 100 is located. In an example, a light-emitting element 30 includes a mini-LED chip.

In an example, as shown in FIGS. 3 and 15, in the backlight module 100, the reflective portion 11 in the light-guiding plate assembly 1 is disposed around an light-emitting element 30. Such an arrangement can make the reflective portion 11 reflect more large-angle light emitted from the light-emitting element 11, facilitating increasing the utilization rate of the light emitted from the light-emitting element 30 by the light-guiding plate assembly 1.

In some embodiments, as shown in FIG. 3, in the direction parallel to the plane where the light-guiding plate assembly 1 is located, the reflective portion 11 at least partially overlaps the light-emitting element 30. That is, the light-emitting element 30 may be at least partially embedded in the light-guiding plate assembly 1. Such an arrangement facilitates the thin design of the backlight module 100.

In an example, as shown in FIG. 3, the light-emitting element 30 is located on a side of the first sub-transmissive-portion 121 facing the light-exiting side 101 of the light-guiding plate assembly 1. When the backlight module 100 works, the small-angle light emitted from the light-emitting element 30 may exit from the light-guiding plate assembly 1 through the first sub-transmissive-portion 121.

In an example, as shown in FIG. 3, the transmissive portion 12 is provided with a recessed structure 120 that recesses toward the light-exiting side of the light-guiding plate assembly 1. In the direction parallel to the plane where the light-guiding plate assembly 1 is located, the light-emitting element 30 at least partially overlaps the recessed structure 120. Part of the large-angle light propagating in the direction parallel to the plane where the light-guiding plate assembly 1 is located passes through the surface of the recessed structure 120 in the process of propagation, and the surface of the recessed structure 120 can diffuse the light emitted from the light-emitting element 30. In this manner, the intensity of light emitted from the single light-emitting element 30 can be balanced at different positions, and the local over-brightness problem of the backlight module 100 can be alleviated. Moreover, in such an arrangement, the light-emitting element 30 is at least partially embedded in the light-guiding plate assembly 1, making the thickness of the backlight module 100 thinner, and facilitating the thin design of the backlight module 100.

In an example, as shown in FIG. 3, an included angle β is provided between a reflective surface 112 of the reflective portion 11 and a light-emitting surface of the light-emitting element 30. In the embodiments of the present disclosure, 90° < β < 180°. In an example, β is complementary to α which is an included angle between the reflective surface 112 and the bottom surface 111 of the reflective portion 11. In, such an arrangement, the large-angle light emitted from the light-emitting element 30 exits after being reflected by the reflective portion 11, avoiding the mutual crosstalk between the light emitted from the different light-emitting elements 30. Moreover, in such an arrangement, for the small-angle light emitted from the light-emitting element 30, the amount of small-angle light reflected by the reflective portion 11 can be reduced, enabling more small-angle light to directly exit from the light-guiding plate assembly 1 through the transmissive portion 12.

In an example, as shown in FIG. 3, in the direction parallel to the plane where the light-guiding plate assembly 1 is located, the shortest distance B2 between the reflective portion 11 and the light-emitting element 30 is equal to or greater than 0.7 mm. That is, the light-emitting element 30 is provided to not overlap the reflective portion 11, to ensure that the light-guiding plate assembly 1 and the light-emitting element 30 can be smooth assembled.

In an example, as shown in FIG. 15, the backlight module 100 also includes a printed circuit board (PCB) 31 including a circuit (not shown) electrically connected to the light-emitting element 30. The PCB 31 is provided to control the lighting of the light-emitting element 30.

Embodiments of the present disclosure also provide a display device, as shown in FIG. 16, FIG. 16 is a sectional diagram of a display device 1000 according to embodiments of the present disclosure. The display device 1000 includes an imaging component 5 and the preceding backlight module 100. In an example, the imaging component 5 includes a liquid crystal display panel. When the display device works, the backlight module 100 emits light, so as to make the display device display images. The structure of the backlight module 100 has been described in detail in the preceding embodiments and is not repeated herein. In an example, the display device may be any electronic device having a display function, such as a mobile phone, a tablet, a laptop, an E-ink book or a television.

In an example, as shown in FIG. 16, the display device 1000 also includes an optical component 7 located between the imaging component 5 and the light-guiding plate assembly 1. The optical component 7 is provided to adjust light emitted from the light-guiding plate assembly 1 toward the display panel. In an example, the optical component 7 includes a brightness enhancing film.

In the embodiments of the present disclosure, the light-guiding plate assembly 1 may be used as a bearing structure for the optical component 7. In such an arrangement, the deformation such as concaving downward of the optical component 7 during the reliability test can be avoided, facilitating the reliability of the optical component 7 and the light-emitting effect of the backlight module 100.

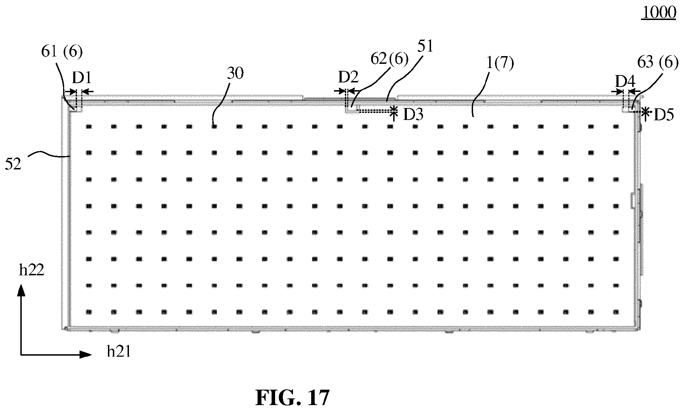

In some embodiments, as shown in FIG. 17, FIG. 17 is a top view of a display device facing away from a light-exiting side according to embodiments of the present disclosure. The display device 1000 also includes stoppers 6. The light-guiding plate assembly 1 is detachably connected to the optical component 7 through the stoppers 6.

In an example, as shown in FIG. 17, the imaging component 5 includes a first edge 51 and a second edge 52. The length of the first edge 51 is greater than the length of the second edge 52. The extension direction of the first edge 51 is parallel to a first direction h21. The stoppers 6 include a first stopper 61, a second stopper 62 and a third stopper 63. The first stopper 61, the second stopper 62 and the third stopper 63 are arranged in a first direction h21. The second stopper 62 is located between the first stopper 61 and the third stopper 63. When the imaging component 5 expands and deforms in a high temperature environment or other environments, the length of the first edge 51, which having a longer length in the imaging component 5, varies more. In the embodiments of the present disclosure, the first stopper 61, the second stopper 62 and the third stopper 63 are arranged in the first direction h21. That is, the first stopper 61, the second stopper 62 and the third stopper 63 are arranged in a direction of a longer side of the imaging component 5. In this manner, when the optical component 7 expands and deforms, the first stopper 61, the second stopper 62 and the third stopper 63 are provided to ensure that the position of the light-guiding plate assembly 1 with respect to the optical component 7 does not change, facilitating the structural stability of the display device 1000.

As shown in FIG. 17, in the embodiments of the present disclosure, a first clearance D1 is provided between the first stopper 61 and the optical component 7, and D1 ≥ 0.1 mm, to achieve a better detachable connection between the first stopper 61 and the optical component 7.

In an example, as shown in FIG. 17, the length L1 of the optical component 7 in the first direction h21 is L1. The expansion rate of the optical component is C. In the first direction h21, a second clearance D2 is provided between the second stopper 62 and the optical component 7. D2 ≥ L1 × C/2. In the embodiments of the present disclosure, the second clearance D2 is provided between the second stopper 62 and the optical component 7 in the first direction h21, ensuring that when the optical component 7 is deformed in the high temperature environment or other environments, squeezing or the like would not occur between the first stopper 61 and the optical component 7 in the first direction h21, which achieves a better detachable connection between the second stopper 62 and the optical component 7 in the first direction h21.

In an example, as shown in FIG. 17, in a second direction h22, a third clearance D3 is provided between the second stopper 62 and the optical component 62. In the embodiments of the present disclosure, D3 ≥ 0.1 mm. The second direction h22 is parallel to the extension direction of the second edge 52. In such an arrangement, a better detachable connection between the first stopper 61 and the optical component 7 in the second direction h22 can be achieved.

In an example, as shown in FIG. 17, in the first direction h21, a fourth clearance D4 is provided between the third stopper 63 and the optical component 7. In the embodiments of the present disclosure, D4 ≥ L1 × C/2. In the embodiments of the present disclosure, the fourth clearance D4 is provided between the third stopper 63 and the optical component 7 in the first direction h21, ensuring that when the optical component 7 is deformed in the high temperature environment or other environments, squeezing or the like would not occur between the third stopper 63 and the optical component 7 in the first direction h21, which achieves a better detachable connection between the third stopper 63 and the optical component 7 in the first direction h21.

In an example, as shown in FIG. 17, in the second direction h22, a fifth clearance D5 is provided between the third stopper 63 and the optical component 7. In the embodiments of the present disclosure, D5 ≥ 0.1 mm. In such an arrangement, a better detachable connection between the first stopper 61 and the optical component 7 in the second direction h22 is achieved.

As shown in FIG. 16, the display device 1000 also includes a sheet metal 91 and a sealant 92. The backlight module 100 is fitted with the imaging component 5 through the sealant 92. The sheet metal 91 is used to bear the imaging component 5.

## Claims

1. A light-guiding plate assembly, comprising:
a reflective portion and a transmissive portion, wherein the transmissive portion comprises a first sub-transmissive-portion and a second sub-transmissive-portion, and wherein in a direction perpendicular to a plane where the light-guiding plate assembly is located, the first sub-transmissive-portion does not overlap the reflective portion, and the second sub-transmissive-portion is located on a side of the reflective portion facing a light-exiting side of the light-guiding plate assembly.

2. The light-guiding plate assembly of claim 1, wherein the reflective portion comprises a bottom surface facing a light-incidence side of the light-guiding plate assembly and a side surface facing the second sub-transmissive-portion, an included angle α is provided between the side surface and the bottom surface, and 0° < α < 90°.

3. The light-guiding plate assembly of claim 1 or 2, wherein the transmissive portion is provided with a recessed structure that recesses toward the light-exiting side of the light-guiding plate assembly.

4. The light-guiding plate assembly of claim 3, wherein a surface of the recessed structure comprises a microstructure.

5. The light-guiding plate assembly of any of the preceding claims, wherein the reflective portion comprises an end portion facing the light-exiting side of the light-guiding plate assembly;
the transmissive portion comprises a first surface facing the light-exiting side of the light-guiding plate assembly; and
a distance between the first surface and the end portion is equal to or greater than 0.3 mm.

6. The light-guiding plate assembly of any of the preceding claims, further comprising:
a diffusion portion located on a side of the transmissive portion facing the light-exiting side of the light-guiding plate assembly.

7. The light-guiding plate assembly of claim 6, wherein the diffusion portion comprises a protruding structure that protrudes from the transmissive portion toward the light-exiting side of the light-guiding plate assembly.

8. The light-guiding plate assembly of any of the preceding claims, wherein the reflective portion and the transmissive portion are bonded through a colloid; or, wherein the reflective portion and the transmissive portion are integrally molded.

9. A backlight module, comprising: a backlight and the light-guiding plate assembly of any one of claims 1 to 8, wherein the light-guiding plate assembly is located on a light-exiting side of the backlight.

10. The backlight module of claim 9, wherein the backlight comprises a light-emitting element located on a side of the first sub-transmissive-portion facing the light-incidence side of the light-guiding plate assembly.

11. The backlight module of claim 10, wherein the transmissive portion is provided with a recessed structure that recesses toward the light-exiting side of the light-guiding plate assembly; and
in a direction parallel to the plane where the light-guiding plate assembly is located, the light-emitting element at least partially overlaps the recessed structure; and
wherein an included angle β is provided between a reflective surface of the reflective portion and a light-emitting surface of the light-emitting element, and 90° < β < 180°.

12. The backlight module of claim 10 or 11, wherein in a direction parallel to the plane where the light-guiding plate assembly is located, a shortest distance between the reflective portion and the light-emitting element is equal to or greater than 0.7 mm.

13. A display device, comprising: an imaging component and the backlight module of any one of claims 9 to 12.

14. The display device of claim 13, further comprising: stoppers and an optical component located between the imaging component and the light-guiding plate assembly; and
the light-guiding plate assembly is detachably connected to the optical component through the stoppers.

15. The display device of claim 14, wherein the stoppers comprise a first stopper, a second stopper and a third stopper;
the first stopper, the second stopper and the third stopper are arranged in a first direction, and the second stopper is located between the first stopper and the third stopper; and
the imaging component comprises a first edge and a second edge, a length of the first edge is greater than a length of the second edge, an extension direction of the first edge is parallel to the first direction.

## Amended claims

### Amended claims in accordance with Rule 137(2) EPC.

1. A light-guiding plate assembly (1), comprising:
a reflective portion (11) and a transmissive portion (12), wherein the transmissive portion (12) comprises a first sub-transmissive-portion (121) and a second sub-transmissive-portion (122), and wherein in a direction (h1) perpendicular to a plane where the light-guiding plate assembly (1) is located, the first sub-transmissive-portion (121) does not overlap the reflective portion (11), and the second sub-transmissive-portion (122) is located on a side of the reflective portion (11) facing a light-exiting side (102) of the light-guiding plate assembly (1);
wherein the light-guiding plate assembly (1) further comprising:
a diffusion portion (4) located on a side of the transmissive portion (12) facing the light-exiting side (102) of the light-guiding plate assembly (1), **characterized in that** the diffusion portion (4) comprises diffusion particles (41).

2. The light-guiding plate assembly (1) of claim 1, wherein the reflective portion (11) comprises a bottom surface (111) facing a light-incidence side (101) of the light-guiding plate assembly (1) and a side surface (112) facing the second sub-transmissive-portion (122), an included angle α is provided between the side surface (112) and the bottom surface (111), and 0° < α < 90°.

3. The light-guiding plate assembly (1) of claim 1 or 2, wherein the transmissive portion (12) is provided with a recessed structure (120) that recesses toward the light-exiting side (102) of the light-guiding plate assembly (1).

4. The light-guiding plate assembly (1) of claim 3, wherein a surface of the recessed structure (120) comprises a microstructure (130).

5. The light-guiding plate assembly (1) of any of the preceding claims,
wherein the reflective portion (11) comprises an end portion (110) facing the light-exiting side (102) of the light-guiding plate assembly (1);
the transmissive portion (12) comprises a first surface (13) facing the light-exiting side (102) of the light-guiding plate assembly (1); and
a distance (B1) between the first surface (13) and the end portion (110) is equal to or greater than 0.3 mm.

6. The light-guiding plate assembly (1) of claim 1, wherein the diffusion portion (4) comprises a protruding structure (40) that protrudes from the transmissive portion (12) toward the light-exiting side (102) of the light-guiding plate assembly (1).

7. The light-guiding plate assembly (1) of any of the preceding claims, wherein the reflective portion (11) and the transmissive portion (12) are bonded through a colloid; or, wherein the reflective portion (11) and the transmissive portion (12) are integrally molded.

8. A backlight module (100), comprising: a backlight (3) and the light-guiding plate assembly (1) of any one of claims 1 to 7, wherein the light-guiding plate assembly (1) is located on a light-exiting side (102) of the backlight (3).

9. The backlight module (100) of claim 8, wherein the backlight (3) comprises a light-emitting element (30) located on a side of the first sub-transmissive-portion (121) facing the light-incidence side (101) of the light-guiding plate assembly (1).

10. The backlight module (100) of claim 9, wherein the transmissive portion (12) is provided with a recessed structure (120) that recesses toward the light-exiting side (102) of the light-guiding plate assembly (1); and
in a direction parallel to the plane where the light-guiding plate assembly (1) is located, the light-emitting element (30) at least partially overlaps the recessed structure (120); and
wherein an included angle β is provided between a reflective surface (112) of the reflective portion (11) and a light-emitting surface of the light-emitting element (30), and 90° < β < 180°.

11. The backlight module (100) of claim 9 or 10, wherein in a direction parallel to the plane where the light-guiding plate assembly (1) is located, a shortest distance (B2) between the reflective portion (11) and the light-emitting element (30) is equal to or greater than 0.7 mm.

12. A display device (1000), comprising: an imaging component (5) and the backlight module (100) of any one of claims 8 to 11.

13. The display device (1000) of claim 12, further comprising: stoppers (6) and an optical component (7) located between the imaging component (5) and the light-guiding plate assembly (1); and
the light-guiding plate assembly (1) is detachably connected to the optical component (7) through the stoppers (6).

14. The display device (1000) of claim 13, wherein the stoppers (6) comprise a first stopper (61), a second stopper (62) and a third stopper (63);
the first stopper (61), the second stopper (62) and the third stopper (63) are arranged in a first direction (h21), and the second stopper (62) is located between the first stopper (61) and the third stopper (63); and
the imaging component (5) comprises a first edge (51) and a second edge (52), a length of the first edge (51) is greater than a length of the second edge (52), an extension direction of the first edge (51) is parallel to the first direction (h21).
